# EUROPEAN PATENT APPLICATION

(11) **EP 4 745 701 A1**
(43) Date of publication of application: **20.05.2026**
(21) Application number: 24838866.2
(22) Date of filing: 11.07.2024
(51) Int. Cl.: G05D 1/00

(54) **PATH PLANNING METHOD, PATH PLANNING APPARATUS AND COMPUTER DEVICE**

(30) Priority: 12.07.2023 CN 202310855405
(71) Applicant: Yosemite Shanghai Robotics Co., Ltd, Shanghai 200233 (CN)
(72) Inventor: SU, Hans, Shanghai 200233 (CN); LI, Jack, Shanghai 200233 (CN); GU, Jeff, Shanghai 200233 (CN); ZHAO, Xun, Shanghai 200233 (CN); FAN, Wolory, Shanghai 200233 (CN); REN, Sunny, Shanghai 200233 (CN)
(74) Representative: JWP Patent & Trademark Attorneys
(86) International application number: PCT/CN2024/104944
(87) International publication number: WO 2025/011614

(57) **Abstract**

Embodiments of the present disclosure, relate to the technical field of path planning, provide a method for path planning, an apparatus for path planning, and a computer device therefor. The method includes: controlling a lawnmower robot to travel along a boundary of a mowing area for at least one lap to obtain a plurality of position information points of the mowing area; performing a fitting process on the plurality of position information points to obtain a fitted curve; performing a polyline conversion process on sample points on the fitted curve to obtain a target polyline; and determining the target polyline as a mowing path for the mowing area. In this way, the operating efficiency of the lawnmower robot is improved.

## Description

This application is based upon and claims priority to Chinese Patent Application No. 202310855405.2, filed before China National Intellectual Property Administration, July 12, 2023 and entitled "METHOD FOR PATH PLANNING, APPARATUS FOR PATH PLANNING, AND COMPUTER DEVICE THEREFOR," the entire contents of which are incorporated herein by reference.

### TECHNICAL FIELD

Embodiments of the present disclosure relate to the technical field of path planning, and in particular, relate to a method for path planning, an apparatus for path planning, and a computer device therefor.

### BACKGROUND

With the continuous development of science and technology, intelligent robots are gradually entering the daily lives and work of users, becoming capable assistants.

In the related art, taking a lawnmower robot as an example, before the lawnmower robot performs mowing operations on a lawn, it is necessary to make planning on the lawn and establish a mowing path, such that mowing is carried out based on the mowing path. However, in practice, the terrain along the edge of a lawn is often complex, and obstacles may be present. Consequently, a mowing path established along the boundary of the lawn may have errors relative to the actual terrain. This may cause the lawnmower robot to miss some areas when mowing along the boundary of the lawn, leaving a significant amount of uncut grass and reducing the operation efficiency of the lawnmower robot.

### SUMMARY

In view of the above problems, embodiments of the present disclosure provide a method for path planning, an apparatus for path planning, and a computer device therefor, which overcome, or at least partially solve, the problem where some areas are missed and a considerable amount of grass remains uncut when the lawnmower robot performs mowing operations along the boundary of a lawn.

In a first aspect of the embodiments of the present disclosure, a method for path planning is provided. The method includes: controlling a lawnmower robot to travel along a boundary of a mowing area for at least one lap to obtain a plurality of position information points of the mowing area; performing a fitting process on the plurality of position information points to obtain a fitted curve; performing a polyline conversion process on sample points on the fitted curve to obtain a target polyline; and determining the target polyline as a mowing path for the mowing area.

In the above technical solutions, by controlling the lawnmower robot to travel along the boundary of the mowing area for at least one lap, the accuracy of the obtained position information points is improved. This improves the accuracy of the fitted curve obtained from the fitting process. Furthermore, by performing the polyline conversion process on the sample points of the fitted curve, a target polyline is obtained and determined as the mowing path. This approach segments the mowing area boundary into a plurality of straight lines, enabling the lawnmower robot to work accurately along the mowing path. In this way, the problem of the lawnmower robot missing certain areas and leaving uncut grass when operating along a complex boundary or in the presence of obstacles is addressed, and thus the operating efficiency of the lawnmower robot is improved.

Moreover, determining the target polyline as the mowing path prevents the lawnmower robot from moving along inefficient paths during operation, thereby further improving the operating efficiency of the lawnmower robot.

In some embodiments, performing the polyline conversion process on the sample points on the fitted curve to obtain the target polyline includes:
step 1, acquiring a plurality of sample points on the fitted curve;
step 2, determining a first set from any position of the plurality of sample points, wherein sample points in the first set are consecutive in terms of sampling sequence, and an initial number of the sample points in the first set is a predetermined number;
step 3, performing a linearization conversion process on the first set to obtain a first straight line;
step 4, in a case where a first distance between the first set and the first straight line is less than or equal to a predetermined distance, acquiring a next sample point that follows the first set from the plurality of sample points, updating the first set by incorporating the next sample point, and repeating step 3, until all of the plurality of sample points have undergone the linearization conversion process; and
step 5, in a case where the first distance between the first set and the first straight line is greater than the predetermined distance, acquiring sample points from the plurality of sample points to form a second set, wherein the second set includes a next sample point that follows the first set, the sample points in the second set are consecutive in terms of sampling sequence, and an initial number of the sample points in the second set is the predetermined number, updating the first set to the second set, and repeating step 3, until all of the plurality of sample points have undergone the linearization conversion process.

In the above technical solutions, the apparatus for path planning acquires a plurality of sample points on a fitted curve, determines a first set from an arbitrary position, and performs a linearization conversion process on the first set to obtain a first straight line. By determining the relationship between the first distance and the predetermined distance and performing a linearization conversion process on all the sampling points on the fitted curve, the accuracy of each straight line resulted from the linearization conversion process is improved, the accuracy of the final target polyline is enhanced, such that the lawnmower robot from is prevented missing areas during mowing, and the operating efficiency of the lawnmower robot is improved.

In some embodiments, the method further includes: determining a distance from each of the sample points in the first set to the first straight line; and determining the first distance based on each of the distances.

In some embodiments, determining the first distance based on each of the distances includes:
determining a sum of squares of each of the distances as the first distance; or
determining a sum of the distances as the first distance; or
determining a mean value of the distances as the first distance.

In some embodiments, the position information is longitude and latitude based on a world coordinate system; or the position information is an x-coordinate and a y-coordinate based on a first coordinate system, wherein the first coordinate system is a Cartesian coordinate system with an initial travel position of the lawnmower robot as an origin, a direction of travel of the lawnmower robot as an X-axis, and a lateral direction of the lawnmower robot as a Y-axis.

In some embodiments, performing the fitting process on the plurality of position information points to obtain the fitted curve includes: performing the fitting process on the plurality of position information points using a B-spline curve algorithm or a least squares method to obtain the fitted curve.

In a second aspect of the embodiments of the present disclosure, an apparatus for path planning is provided. The apparatus includes: a control module, configured to control a lawnmower robot to travel along a boundary of a mowing area for at least one lap to obtain a plurality of position information points of the mowing area; a processing module, configured to perform a fitting process on the plurality of position information points to obtain a fitted curve, wherein the processing module is further configured to perform a polyline conversion process on sample points on the fitted curve to obtain a target polyline; and a determining module, configured to determine the target polyline as a mowing path for the mowing area.

In a third aspect of the embodiments of the present disclosure, an electronic device is provided. The electronic device includes a memory and a processor. The memory stores one or more computer programs; and the processor, when running the one or more computer programs, is caused to perform the method for path planning in the first aspect of the embodiments of the present disclosure.

In a fourth aspect of the embodiments of the present disclosure, a computer-readable storage medium is provided. The computer-readable storage medium stores one or more computer programs. The one or more computer programs, when run by a processor, cause the processor to perform the method for path planning in the first aspect of the embodiments of the present disclosure.

The above description only summarizes the technical solutions according to the embodiments of the present disclosure. Specific embodiments of the present disclosure are described hereinafter to better and clearer understand the technical solutions of the embodiments of the present disclosure, to practice the technical solutions based on the disclosure of the specification and to make the above and other objectives, features and advantages of the embodiments of the present disclosure more apparent and understandable.

### BRIEF DESCRIPTION OF THE DRAWINGS

FIG. 1 is a schematic flowchart of a method for path planning according to some embodiments of the present disclosure.
FIG. 2 is a schematic diagram of position information points according to some embodiments of the present disclosure.
FIG. 3 is a schematic diagram of a fitted curve according to some embodiments of the present disclosure.
FIG. 4 is a schematic flowchart of a method for obtaining a target polyline according to some embodiments of the present disclosure.
FIG. 5 is a schematic diagram illustrating a process of obtaining a target polyline according to some embodiments of the present disclosure.
FIG. 6 is a schematic structural diagram of an apparatus for path planning according to some embodiments of the present disclosure.
FIG. 7 is a schematic structural diagram of a computer device according to some embodiments of the present disclosure.

### DETAILED DESCRIPTION OF THE EMBODIMENTS

For clearer descriptions of the objectives, technical solutions, and advantages of embodiments of the present disclosure, the following clearly and completely describes the technical solutions according to the embodiments of the present disclosure with reference to the accompanying drawings. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

Unless otherwise defined, all technical terms and scientific terms used herein have the same meaning as commonly understood by persons skilled in the art to which the subject matter of the present disclosure belongs. The terms used in this specification is merely selected for a purpose of describing objections of the embodiments of the present disclosure, but not for explaining or limiting the subject of the present disclosure. In the description, claims, and drawing descriptions of the present disclosure, the terms "comprise" and "have" as well as any variations thereof are intended to cover non-exclusive inclusion.

The terms "example" and "embodiment" in the present disclosure signify that the specific characteristic, structures or features described with reference to the embodiments may be covered in at least one embodiment of the present disclosure. The term "embodiment," when used in various positions of the description, neither indicates the same embodiment, nor indicates an independent or optional embodiment that is exclusive of the other embodiments. A person skilled in the art would implicitly or explicitly understand that the embodiments described in the present disclosure may be incorporated with other embodiments.

The term "and/or" in the present disclosure is merely an association relationship for describing associated objects, which represents that there may exist three types of relationships. For example, the phrase "A and/or B" may indicate (A), (B), or (A and B). In addition, the forward-slash symbol "/" generally represents an "or" relationship between associated objects before and after the symbol.

In addition, terms such as "first," "second," and the like in the specifications, claims and the accompanying drawings of the present disclosure are intended to distinguish different objects but are not intended to define a specific sequence. Such terms may explicitly or implicitly indicate one or more such features.

In the description of the present disclosure, the terms "a plurality of" and "at least two" signify two or more, unless otherwise specified. Likewise, the terms "a plurality of groups" and "at least two groups" signify two or more groups (including two groups).

For better understanding of the technical solutions according to the embodiments of the present disclosure, the technical solutions of the present disclosure are clearly and completely described with reference to the accompanying drawings of the embodiments of the present disclosure.

Exemplarily, some embodiments of the present disclosure provide a method for path planning, an apparatus for path planning, and a computer device therefor. Based on the fact that a travel trajectory of a lawnmower robot during an actual mowing process is a polyline, a mowing path for the lawnmower robot may also be planned as a polyline. This allows the mowing path to be simulated as the travel trajectory of the lawnmower robot, thereby enabling accurate and complete mowing of a mowing area.

The method for path planning according to the present disclosure is performed by a computer device, or by an apparatus for path planning within the computer device. The apparatus for path planning may be implemented via a combination of software and/or hardware. For example, the apparatus for path planning may be an application (APP), a webpage, a public account, or the like. For simplicity of description, some embodiments of the present disclosure are described using an apparatus for path planning as an example.

Computer devices may include, but are not limited to, servers, desktop computers, mobile phones, tablet computers, wearable devices, in-vehicle devices, augmented reality (AR) devices, virtual reality (VR) devices, or the like.

It should be noted that the lawnmower robot according to the embodiments of the present disclosure may also be any other device capable of automatically moving along a predetermined boundary, for example, a robotic sweeper, a robotic vacuum cleaner, or an autonomous cleaning vehicle.

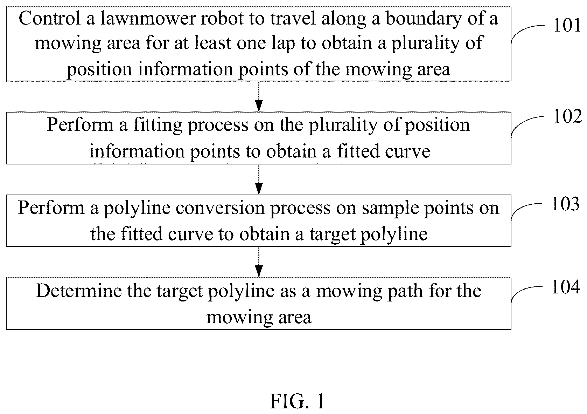

Hereinafter, the method for path planning according to the embodiments of the present disclosure is hereinafter described with reference to FIG. 1.

FIG. 1 is a schematic flowchart of a method for path planning according to some embodiments of the present disclosure. As illustrated in FIG. 1, the method includes the following steps.

In step 101, a lawnmower robot is controlled to travel along a boundary of a mowing area for at least one lap to obtain a plurality of position information points of the mowing area.

The mowing area is an area where the lawnmower robot performs mowing operations, for example, a park lawn, a golf course, a sports field, or a residential community lawn.

The boundary of the mowing area is an outer edge of the mowing area, and may include an outer boundary of a map of the mowing area or boundaries of obstacles within the mowing area.

In some examples, where path planning for a mowing area is required, considering the travel speed or accuracy of the lawnmower robot, an apparatus for path planning may control the lawnmower robot to travel along the boundary of the mowing area for one lap to obtain the plurality of position information points.

In other examples, where path planning for a mowing area is required, considering that traveling for only one lap may cause some parts of the boundary to be missed, the apparatus for path planning may control the lawnmower robot to travel along the boundary for multiple laps. This allows for the acquisition of a more complete and accurate set of position information points for the mowing area.

The plurality of position information points are used to indicate the specific locations of a plurality of points within the mowing area.

The apparatus for path planning may obtain the plurality of position information points in various ways.

In one feasible implementation, the apparatus for path planning controls the lawnmower robot to acquire one position information point at a predetermined time interval. By controlling the lawnmower robot to perform such an acquisition process multiple times, the plurality of position information points are obtained.

For example, in a case where the predetermined time interval is 2 seconds, the apparatus for path planning controls the lawnmower robot to start from an initial travel position and acquire a position information point every 2 seconds. In a case where the total travel time is 300 seconds, 150 position information points are acquired.

In another feasible implementation, the apparatus for path planning controls the lawnmower robot to acquire one position information point at a predetermined distance interval. By controlling the lawnmower robot to perform such an acquisition process multiple times, the plurality of position information points are obtained.

For example, in a case where the predetermined distance is 3 meters, the apparatus for path planning controls the lawnmower robot to start from an initial travel position and acquire a position information point every 3 meters. In a case where the total travel distance is 300 meters, 100 position information points are acquired.

In some examples, the position information is longitude and latitude based on a world coordinate system.

The apparatus for path planning may acquire the position information through one of the following schemes: Scheme 11, Scheme 12, or Scheme 13.

Scheme 11: A real-time kinematic (RTK) sensor and a multi-constellation multi-frequency global navigation satellite system (GNSS) antenna are arranged on the lawnmower robot. The RTK sensor performs a differential calculation on differential positioning data acquired via the RTK sensor and coordinate data acquired via the multi-constellation multi-frequency GNSS antenna to obtain positioning data of the lawnmower robot, which is then used as the position information.

Scheme 12: A global positioning system (GPS) is arranged on the lawnmower robot, and the position information is acquired based on the GPS.

Scheme 13: Map information of the mowing area is acquired, and the position information is obtained based on the map information. The map information may be acquired from a cloud server or other devices (such as a map acquisition device, a map display device, or the like).

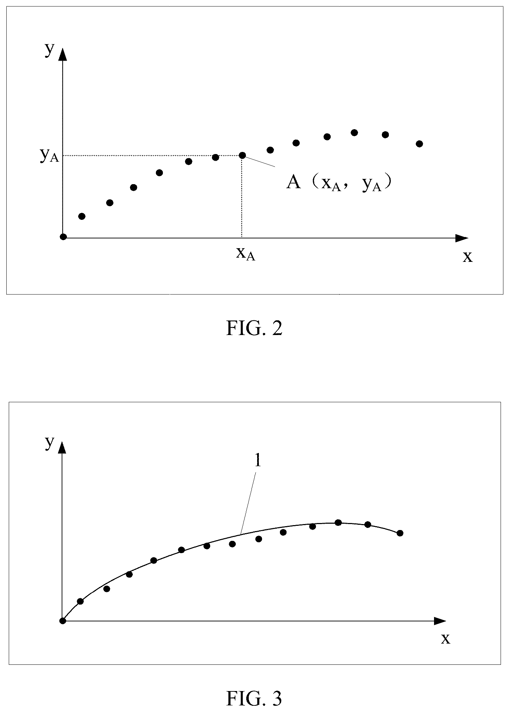

In other examples, the position information is an x-coordinate and a y-coordinate based on a first coordinate system, wherein the first coordinate system is a Cartesian coordinate system with an initial travel position of the lawnmower robot as an origin, a direction of travel of the lawnmower robot as an X-axis, and a lateral direction of the lawnmower robot as a Y-axis. For example, one position information point may be point A (x_{A}, y_{A}), as illustrated in FIG. 2.

In step 102, a fitting process is performed on the plurality of position information points to obtain a fitted curve.

In some examples, the apparatus for path planning may perform the fitting process on the plurality of position information points using a B-spline curve algorithm or a least squares method to obtain the fitted curve.

Taking a portion of the position information points illustrated in FIG. 2 as an example, the apparatus for path planning may perform the fitting process on this portion to obtain a fitted curve, which is the solid line 1 illustrated in FIG. 3.

In the above examples, the apparatus for path planning performs the fitting process on the plurality of position information points to obtain the fitted curve, such that the line formed by the plurality of position information points is smoother, and thus the computational load of the subsequent polyline conversion process is reduced. Furthermore, the smoothness of movement of the lawnmower robot when operating along the target polyline derived from the fitted curve is improved, such that operating time is saved and the operating efficiency of the lawnmower robot is improved.

Moreover, using the B-spline curve algorithm for the fitting process yields a higher-precision fitted curve, which in turn leads to a higher-precision target polyline, thereby improving the accuracy of the mowing operation of the lawnmower robot along the target polyline.

In step 103, a polyline conversion process is performed on sample points on the fitted curve to obtain a target polyline.

In step 104, the target polyline is determined as a mowing path for the mowing area.

Considering that the actual travel trajectory of the lawnmower robot during mowing is a polyline, the operating efficiency of the lawnmower robot is higher and the mowing effect is better when traveling along straight lines compared to curves. Therefore, the apparatus for path planning performs the polyline conversion process on the fitted curve to obtain the target polyline. The lawnmower robot then uses the target polyline as the mowing path, which avoids missing areas that need to be mowed and thus improves the operating efficiency of the lawnmower robot. In some examples, the apparatus for path planning may perform the polyline conversion process on the sample points using a least squares method or a polynomial fitting method to obtain the target polyline.

In some other examples, the apparatus for path planning may group the sample points on the fitted curve into a plurality of sets, wherein the sample points in each set are consecutive in terms of sampling sequence. A fitted straight line is calculated for each set of sample points, resulting in a plurality of fitted straight lines. The target polyline is then obtained based on the plurality of fitted straight lines.

The target polyline is a line composed of a plurality of end-to-end connected line segments, allowing the lawnmower robot to perform the mowing operations along the target polyline.

In the embodiments of the present disclosure, by controlling the lawnmower robot to travel along the boundary of the mowing area for at least one lap, the apparatus for path planning improves the accuracy of the obtained position information points. This improves the accuracy of the fitted curve obtained from the fitting process. Furthermore, by performing the polyline conversion process on the sample points of the fitted curve, a target polyline is obtained and determined as the mowing path. This approach segments the mowing area boundary into a plurality of straight lines, enabling the lawnmower robot to work accurately along the mowing path. In thiis way, the problem of the lawnmower robot missing certain areas and leaving uncut grass when operating along a complex boundary or in the presence of obstacles is addressed, and thus the operating efficiency of the lawnmower robot is improved.

Moreover, determining the target polyline as the mowing path prevents the lawnmower robot from moving along inefficient paths during operation, thereby further improving the operating efficiency of the lawnmower robot.

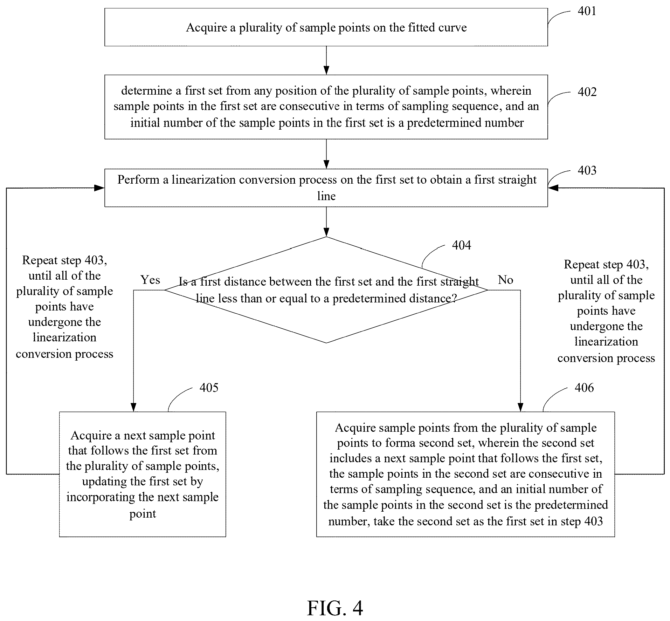

FIG. 4 is a schematic flowchart of a method for obtaining a target polyline according to some embodiments of the present disclosure. As illustrated in FIG. 4, the method includes the following steps.

In step 401, a plurality of sample points on the fitted curve are acquired.

The plurality of sample points on the fitted curve are obtained by sampling the fitted curve.

In some examples, the apparatus for path planning may sample the fitted curve using an equal-step method to acquire the plurality of sample points. Specifically, sample points are uniformly distributed along the direction of the fitted curve at equal step lengths, for example, 5 mm, 10 mm, or 15 mm.

In step 402, a first set is determined from any position of the plurality of sample points, wherein sample points in the first set are consecutive in terms of sampling sequence, and an initial number of the sample points in the first set is a predetermined number.

The predetermined number is an integer greater than 0, for example, 3, 5, or 10.

For example, in a case where the predetermined number is 3, the apparatus for path planning acquires three consecutive sample points from any position of the plurality of sample points to form the first set.

In the above example, by selecting a portion of the sample points as the first set and segmenting the plurality of sample points for the polyline conversion process, the accuracy of the target polyline obtained from the fitted curve is improved compared to directly performing a polyline conversion process on all sample points at once. This improves the accuracy of the lawnmower robot's mowing work along the target polyline, and further enhances the operating efficiency of the lawnmower robot.

In step 403, a linearization conversion process is performed on the first set to obtain a first straight line.

In some examples, the apparatus for path planning may perform the linearization conversion process on the first set using methods such as least squares, gradient descent, or the Gauss-Newton method.

In step 404, whether a first distance between the first set and the first straight line is less than or equal to a predetermined distance is determined. In a case where the first distance is less than or equal to the predetermined distance, step 405 is performed; or in a case where the first distance is greater than the predetermined distance, step 406 is performed.

The first distance is used to represent a relative positional relationship between the first set and the first straight line, and may be obtained by calculating the distances from individual sample points in the first set to the first straight line.

The predetermined distance may be, for example, 0.1 mm, 0.2 mm, or 0.5 mm.

In the above example, by the apparatus for path planning determining the relationship between the first distance and the predetermined distance, the accuracy of the first straight line obtained from the first set may be improved, and thus situations where some sample points in the first set deviate significantly from the first straight line may be avoided, thereby improving the accuracy of the resulting target polyline.

In step 405, a next sample point that follows the first set is acquired from the plurality of sample points, the first set is updated by incorporating the next sample point, and step 403 is repeated, until all of the plurality of sample points have undergone the linearization conversion process.

In a case where the apparatus for path planning determines that the first distance is less than or equal to the predetermined distance, the apparatus for path planning adds the next sample point to the first set allows the first straight line to be derived from more sample points within a predetermined error tolerance (i.e., the predetermined distance). This results in a target polyline composed of fewer straight lines while maintaining a small error. Consequently, when the lawnmower robot operates along the target polyline, time wasted on changing direction is reduced, thereby improving the operating efficiency of the lawnmower robot.

In step 406, sample points are acquired from the plurality of sample points to form a second set, wherein the second set includes a next sample point that follows the first set, the sample points in the second set are consecutive in terms of sampling sequence, and an initial number of the sample points in the second set is the predetermined number, the second set is taken as the first set in the step 403, and step 403 is repeated, until all of the plurality of sample points have undergone the linearization conversion process.

In a case where the apparatus for path planning determines that the first distance is greater than the predetermined distance, the apparatus for path planning forms the second set and takes the second set as the first set for the line conversion process reduces the error of the obtained straight line, thereby improving the accuracy of the target polyline derived from the fitted curve.

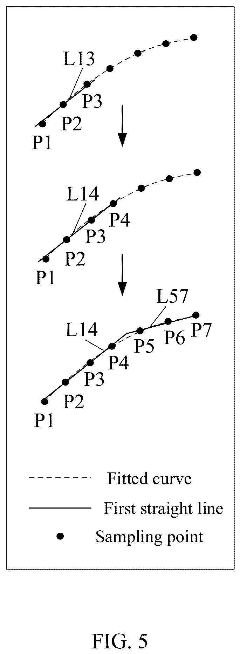

Hereinafter, the process of obtaining the target polyline is described with reference to FIG. 5, using a set of sample points [P1, P2, P3, P4, P5, P6, P7] and a predetermined number of 3 as an example.

FIG. 5 is a schematic diagram illustrating a process of obtaining a target polyline according to some embodiments of the present disclosure. As illustrated in FIG. 5, the apparatus for path planning determines a set [P1, P2, P3] from the plurality of sample points as the first set. The apparatus for path planning performs a linearization conversion process on the set [P1, P2, P3] to obtain a first straight line L79. The apparatus for path planning then calculates a first distance from the first straight line L79 to a set [P7, P8, P9].

In a case where the first distance from L19 to the set [P7, P8, P9] is less than or equal to a predetermined distance. Hence, the apparatus for path planning determines a set [P1, P2, P3, P4] is the first set, and performs a linearization conversion process on the set [P1, P2, P3, P4] to obtain another first straight line L14. The apparatus for path planning calculates a first distance from the another first straight line to the set [P1, P2, P3, P4].

In a case where the first distance from the straight line L14 to the set [P1, P2, P3, P4] is greater than a predetermined distance. The apparatus for path planning then determines a set [P5, P6, P7] from the plurality of sample points is a second set. The apparatus for path planning update the first set to the set [P5, P6, P7], and then performs a linearization conversion process on the set [P5, P6, P7] to obtain another first straight line L57. The apparatus for path planning calculates a first distance from the another first straight line L57 to the set [P5, P6, P7].

In this case, the first distance from the another first straight line L57 to the set [P5, P6, P7] is greater than a predetermined distance. Hence, the apparatus for path planning has performed the linearization conversion process on all the sample pints in the plurality of sets of sample points. Consequently, the apparatus for path planning obtains a target polyline composed of L14 and L57, which serves as the mowing path for the mowing area.

In the embodiments of the present disclosure, the apparatus for path planning acquires a plurality of sample points on a fitted curve, determines a first set from an arbitrary position, and performs a linearization conversion process on the first set to obtain a first straight line. By determining the relationship between the first distance and the predetermined distance and performing a linearization conversion process on all the sampling points on the fitted curve, the accuracy of each straight line resulted from the linearization conversion process is improved, the accuracy of the final target polyline is enhanced, such that the lawnmower robot from is prevented missing areas during mowing, and the operating efficiency of the lawnmower robot is improved.

Based on the description of the above embodiments, the apparatus for path planning may determine a distance from each sample point in the first set to the first straight line. Consequently, the apparatus for path planning may determine the first distance based on each of the distances.

In some examples, the apparatus for path planning determines a sum of squares of each of the distances as the first distance.

For example, in a case where the first set includes sample points P1, P2, and P3, and the first straight line is L13, the distances d1, d2, and d3 from P1, P2, and P3 to L13 are calculated respectively. The first distance is then determined as the sum of the squares of d1, d2, and d3.

Determining the sum of squares as the first distance may amplify the values, such that the distance relationship between the sample points and the straight line is more clearly represented.

In other examples, the apparatus for path planning determines a sum of the distances as the first distance.

For example, in a case where the first set includes sample points P1, P2, and P3, and the first straight line is L13, the distances d1, d2, and d3 from P1, P2, and P3 to L13 are calculated respectively. The sum of d1, d2, and d3 is determined as the first distance.

Determining the sum of the distances as the first distance may amplify the values, such that the distance relationship between the sample points and the straight line is more clearly represented.

In other examples, the apparatus for path planning determines the mean value of the distances as the first distance.

For example, in a case where the first set includes sample points P1, P2, and P3, and the first straight line is L13, the distances d1, d2, and d3 from P1, P2, and P3 to L13 are calculated respectively. The mean value of d1, d2, and d3 is determined as the first distance.

Using the mean value as the first distance may provide a more uniform and accurate representation of the distance relationship between the sample points in the first set and the first straight line.

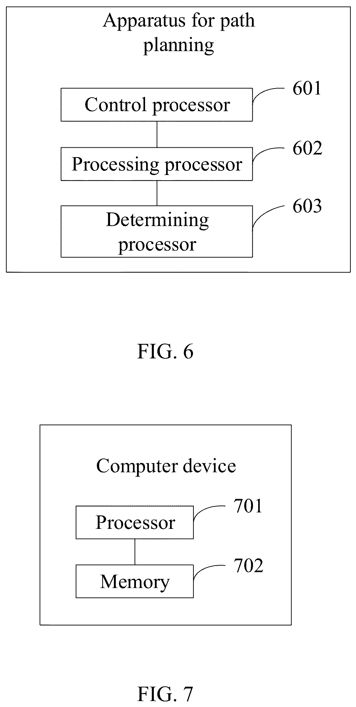

FIG. 6 is a schematic structural diagram of an apparatus for path planning according to some embodiments of the present disclosure. As illustrated in FIG. 6, the apparatus includes a control module 601, a processing module 602, and a determining module 603.

The control module 601 is configured to control a lawnmower robot to travel along a boundary of a mowing area for at least one lap to obtain a plurality of position information points of the mowing area.

The processing module 602 is configured to perform a fitting process on the plurality of position information points to obtain a fitted curve.

The processing module 602 is further configured to perform a polyline conversion process on sample points on the fitted curve to obtain a target polyline.

The determining module 603 is configured to determine the target polyline as a mowing path for the mowing area.

It should be noted that the apparatus for path planning of the embodiments of the present disclosure may be used to implement the technical solutions according to the method embodiments, and the implementation principles are technical effects are similar, which are thus not described herein any further.

In some embodiments, the processing module 602 is specifically configured to perform:
step 1, acquiring a plurality of sample points on the fitted curve;
step 2, determining a first set from any position of the plurality of sample points, wherein sample points in the first set are consecutive in terms of sampling sequence, and an initial number of the sample points in the first set is a predetermined number;
step 3, performing a linearization conversion process on the first set to obtain a first straight line;
step 4, in a case where a first distance between the first set and the first straight line is less than or equal to a predetermined distance, acquiring a next sample point that follows the first set from the plurality of sample points, updating the first set by incorporating the next sample point, and repeating step 3, until all of the plurality of sample points have undergone the linearization conversion process; and
step 5, in a case where the first distance between the first set and the first straight line is greater than the predetermined distance, acquiring sample points from the plurality of sample points to form a second set, wherein the second set includes a next sample point that follows the first set, the sample points in the second set are consecutive in terms of sampling sequence, and an initial number of the sample points in the second set is the predetermined number, updating the first set to the second set, and repeating step 3, until all of the plurality of sample points have undergone the linearization conversion process.

In some embodiments, the processing processor 602 is further configured to: determine a distance from each sample point in the first set to the first straight line; and determine the first distance based on each of the distances.

In some embodiments, the processing processor 602 is specifically configured to: determine a sum of squares of each of the distances as the first distance; or determine a sum of the distances as the first distance; or determine a mean value of the distances as the first distance.

In some embodiments, the position information is longitude and latitude based on a world coordinate system; or the position information is an x-coordinate and a y-coordinate based on a first coordinate system, wherein the first coordinate system is a Cartesian coordinate system with an initial travel position of the lawnmower robot as an origin, a direction of travel of the lawnmower robot as an X-axis, and a lateral direction of the lawnmower robot as a Y-axis.

In some embodiments, the processing processor 602 is specifically configured to: perform the fitting process on the plurality of position information points using a B-spline curve algorithm or a least squares method to obtain the fitted curve.

FIG. 7 is a schematic structural diagram of a computer device according to some embodiments of the present disclosure. As illustrated in FIG. 7, the computer device may include a processor 701 and a memory 702. The memory 702 stores one or more computer programs; and the process, when running the one or more computer programs, is caused to to perform the method for path planning as illustrated in FIG. 1 or FIG. 4 according to the embodiments of the present disclosure.

Some embodiments of the present disclosure further provide a computer-readable storage medium. The computer-readable storage medium stores one or more computer programs. The one or more computer programs, when run by a processor, cause the processor to perform the method for path planning as illustrated in FIG. 1 or FIG. 4 according to the embodiments of the present disclosure.

In the several embodiments according to the present disclosure, it should be understood that the disclosed system, apparatus and method may be practiced in other manners. The above described device embodiments are merely illustrative. For example, the module or unit division is merely logical function division and may be other divisions in actual practice. For example, a plurality of units or components may be combined or integrated into another device, or some features may be ignored or not performed.

In addition, those skilled in the art shall understand that, although some embodiments described herein include some features included in other embodiments, rather than other features, a combination of the features in different embodiments signifies that the features are within the scope of the present disclosure and different embodiments may be derived. For example, in the claims appended hereinafter, any one of the embodiments for which protection is sought may be practiced in any combination manner.

In summary, it should be finally noted that the above-described embodiments are merely for illustration of the present disclosure, but are not intended to limit the present disclosure. Although the present disclosure is described in detail with reference to these embodiments, a person skilled in the art may also make various modifications to the technical solutions disclosed in the embodiments, or make equivalent replacements to a part of the technical features contained therein. Such modifications or replacements, made without departing from the principles of the present disclosure, shall fall within the scope of the present disclosure.

## Claims

1. A method for path planning, comprising:
controlling a lawnmower robot to travel along a boundary of a mowing area for at least one lap to obtain a plurality of position information points of the mowing area;
performing a fitting process on the plurality of position information points to obtain a fitted curve;
performing a polyline conversion process on sample points on the fitted curve to obtain a target polyline; and
determining the target polyline as a mowing path for the mowing area.

2. The method according to claim 1, wherein performing the polyline conversion process on the sample points on the fitted curve to obtain the target polyline comprises:
step 1, acquiring a plurality of sample points on the fitted curve;
step 2, determining a first set from any position of the plurality of sample points, wherein sample points in the first set are consecutive in terms of sampling sequence, and an initial number of the sample points in the first set is a predetermined number;
step 3, performing a linearization conversion process on the first set to obtain a first straight line;
step 4, in a case where a first distance between the first set and the first straight line is less than or equal to a predetermined distance, acquiring a next sample point that follows the first set from the plurality of sample points, updating the first set by incorporating the next sample point, and repeating step 3, until all of the plurality of sample points have undergone the linearization conversion process; and
step 5, in a case where the first distance between the first set and the first straight line is greater than the predetermined distance, acquiring sample points from the plurality of sample points to form a second set, wherein the second set comprises a next sample point that follows the first set, the sample points in the second set are consecutive in terms of sampling sequence, and an initial number of the sample points in the second set is the predetermined number, updating the first set to the second set, and repeating step 3, until all of the plurality of sample points have undergone the linearization conversion process.

3. The method for path planning according to claim 2, further comprising:
determining a distance from each of the sample points in the first set to the first straight line; and
determining the first distance based on each of the distances.

4. The method for path planning according to claim 3, wherein determining the first distance based on each of the distances comprises:
determining a sum of squares of each of the distances as the first distance; or
determining a sum of the distances as the first distance; or
determining a mean value of the distances as the first distance.

5. The method according to any one of claims 1 to 4, wherein:
the position information is longitude and latitude based on a world coordinate system; or
the position information is an x-coordinate and a y-coordinate based on a first coordinate system, wherein the first coordinate system is a Cartesian coordinate system with an initial travel position of the lawnmower robot as an origin, a direction of travel of the lawnmower robot as an X-axis, and a lateral direction of the lawnmower robot as a Y-axis.

6. The method according to any one of claims 1 to 4, wherein the performing the fitting process on the plurality of position information points to obtain the fitted curve comprises:
performing the fitting process on the plurality of position information points using a B-spline curve algorithm or a least squares method to obtain the fitted curve.

7. An apparatus for path planning, comprising:
a control module, configured to control a lawnmower robot to travel along a boundary of a mowing area for at least one lap to obtain a plurality of position information points of the mowing area;
a processing module, configured to perform a fitting process on the plurality of position information points to obtain a fitted curve, wherein
the processing module is further configured to perform a polyline conversion process on sample points on the fitted curve to obtain a target polyline; and
a determining module, configured to determine the target polyline as a mowing path for the mowing area.

8. An electronic device, comprising: at least one memory and at least one processor; wherein
the memory is configured to store one or more computer-executable programs or instructions; and
the processor is configured to run or execute the computer-executable programs or instructions stored in the memory to cause the electronic device to perform the method for path planning as defined in any one of claims 1 to 6.

9. An apparatus for path planning, comprising: a processor;
wherein the processor is configured to run or execute one or more computer-executable programs or instructions in a memory to cause the apparatus for path planning to perform the method for path planning as defined in any one of claims 1 to 6.

10. A computer-readable storage medium, storing one or more computer-executable programs or instructions thereon, wherein the one or more computer-executable programs or instructions, when run or executed by an electronic device, cause the electronic device to perform the method for path planning as defined in any one of claims 1 to 6.
